# EUROPÄISCHE PATENTSCHRIFT

(11) **EP 2 762 919 B1**
(45) Veröffentlichungstag und Bekanntmachung des Hinweises auf die Patenterteilung: **02.01.2019**
(21) Anmeldenummer: 14152576.6
(22) Anmeldetag: 27.01.2014
(51) Int. Cl.: G01S 15/93, G01S 7/527, G01S 7/539, G01S 15/46

(54) **Verfahren zur Hinderniserkennung im Fahrweg eines Fahrzeuges durch einen Ultraschallsensor**
Method for detecting obstacles in the path of a vehicle by means of an ultrasonic sensor
Procédé de détection d'obstacles sur la voie de circulation d'un véhicule par un capteur à ultrasons

(30) Priorität: 01.02.2013 DE 102013002071
(43) Veröffentlichungstag der Anmeldung: 06.08.2014
(73) Patentinhaber: Valeo Schalter und Sensoren GmbH, 74321 Bietigheim-Bissingen (DE)
(72) Erfinder: Dr. Ludwig, Michael, 68159 Mannheim (DE); Lill, Anton, 74348 Lauffen am Neckar (DE)

(56) Entgegenhaltungen:
- EP-A2- 2 472 286
- CN-Y- 2 733 378
- DE-A1- 4 013 684
- JP-A- H01 207 806
- JP-A- H01 232 255
- JP-A- S59 180 383

## Beschreibung

Die Erfindung betrifft ein Verfahren zur Hinderniserkennung im Fahrweg eines Fahrzeugs durch einen Ultraschallsensor, insbesondere durch einen Ultraschallsensor in einem Umfelderkennungssystem eines Kraftfahrzeugs nach dem Oberbegriff des Anspruchs 1.

Aus der DE 10 2010 056 439 A1 ist ein Verfahren zur Auswertung von Signalen eines Ultraschallsensors bekannt, wobei zu einem vorgegebenen Sendezeitpunkt ein Messsignal ausgesendet und in Reaktion auf das Messsignal mindestens ein Echosignal empfangen und ausgewertet wird. Während der Auswertung jedes empfangenen Echosignals wird dieses mit einer Schwellwertkurve verglichen, wobei in einer ersten Betriebsart der Verlauf der Schwellwertkurve so angepasst wird, dass empfangene Echosignale, deren Amplituden unterhalb der Schwellwertkurve liegen, als Störsignale erkannt und ausgeblendet werden. Echosignale, deren Amplituden oberhalb der Schwellwertkurve liegen, werden als Nutzsignale erkannt und zur Ermittlung von Abständen zu erkannten Objekten ausgewertet. Eine Erweiterung der Funktionalität eines Ultraschallsystems wird dadurch möglich, dass in einer zweiten Betriebsart der Verlauf der Schwellwertkurve so angepasst wird, dass als Bodenreflexion erkannte Störsignalanteile erfasst werden, aus welchen unter Ausnutzung des Dopplereffekts eine Fahrzeuggeschwindigkeit relativ zu einer Fahrbahnoberfläche ermittelt wird.

Bekannte Umfelderkennungssysteme in Kraftfahrzeugen sind so gestaltet, dass die Ultraschallsensoren Schall reflektierende Hindernisse erfassen, da der reflektierte Schall Rückschlüsse auf die Existenz eines Hindernisses und dessen Entfernung zum Ultraschallsensor erlaubt. Problematisch sind jedoch Hindernisse, die Schall schlucken bzw. kaum reflektieren und daher nur schwer oder gar nicht erkannt werden können. Liegen solche Hindernisse außerhalb des Sichtbereichs eines Fahrzeugführers z. B. beim Rückwärtsfahren, ist die Gefahr einer Kollision gegeben. Besonders problematisch ist die Annäherung des Fahrzeugs an eine Stufe, einen Abgrund, eine Kaimauer oder dergleichen.

Aus der CN 2 733 378 Y sowie der JP S59-180383 A sind jeweils gattungsgemäße Verfahren zur Erkennung von Hindernissen im Fahrweg eines Fahrzeugs bekannt, die durch eine Absenkung des Bodenniveaus gebildet sind, wie z. B. Stufen oder Abgründe. Bei den bekannten Verfahren wird mittels eines an einem Fahrzeug in einer vorgegebenen Höhe oberhalb eines Bodens angeordneten Ultraschallsensor ein Signal ausgesendet und die Amplitude des Empfangssignals über die Zeit überwacht. Bei einer signifikanten Absenkung der Amplitude innerhalb eines vorgegebenen Zeitfensters kann dann ein im Fahrweg befindliches Hindernis in Form einer Absenkung des Bodenniveaus erkannt werden.

Der Erfindung liegt die Aufgabe zugrunde, ein Verfahren der im Oberbegriff des Anspruchs 1 genannten Art derart weiterzubilden, dass über einen Ultraschallsensor auch Hindernisse sicher erkannt werden können, die keine oder nur geringe Schall reflektierenden Eigenschaften haben.

Die Aufgabe wird nach den kennzeichnenden Merkmalen des Anspruchs 1 gelöst.

Die Amplituden der Empfangssignale werden über eine vorgegebene Zeit überwacht; wird eine signifikante Absenkung der Amplitude innerhalb des vorgegebenen Zeitfensters festgestellt, liegt im Fahrweg ein Schall absorbierendes oder Schall nicht reflektierendes Hindernis. Die signifikante Absenkung der Amplitude innerhalb des vorgegebenen Zeitfensters kann als Signal genutzt und - z. B. durch eine optische Anzeige - das Hindernis im Fahrweg angezeigt werden.

Vorteilhaft wird das zeitliche Intensitätsprofil des vom Boden des Fahrwegs reflektierten Schalls, also das Bodenecho des Ultraschallsignals ausgewertet. Dies erfolgt in einfacher Weise durch Vergleich der Amplitude des Empfangssignals mit einem vorgegebenen Schwellwert innerhalb eines vorgegebenen Zeitfensters. Nach Aussenden des Ultraschallsignals wird - abhängig von der Anordnung des Ultraschallsensors über dem Boden - das Bodenecho erfasst und im Empfangssignal abgebildet. Eine Änderung des vom Boden reflektierten Signals schlägt sich in der Amplitude des Empfangssignals nieder, so dass bei Unterschreiten des Schwellwertes davon ausgegangen werden kann, dass ein Teil des Bodenechos fehlt. Dies ist ein Hinweis auf einen im Fahrweg liegenden Abgrund oder ein Schall schluckendes Hindernis, welches durch Aktivierung einer Anzeige dem Fahrzeugführer optisch und/oder akustisch angezeigt werden kann. Das erfindungsgemäße Verfahren kann mit einem Ultraschallsensoren aufweisenden Umfelderkennungssystem eines Kraftfahrzeugs, insbesondere eines Parkhilfesystems ausgeführt werden. Gemäß der Erfindung werden die in der Zeit aufeinander folgenden Amplituden des Empfangssignals miteinander verglichen, um bei einer signifikanten Änderung zeitlich aufeinander folgende Amplituden die Erkennung eines im Fahrweg befindlichen Hindernisses anzuzeigen. Zweckmäßig ist hierzu ein Messintervall vorgesehen, innerhalb dessen zeitlich aufeinander folgende Amplituden ausgewertet werden. Das Messintervall wird über der Zeit des Empfangssignals innerhalb des vorgegebenen Zeitfensters aufeinander folgend gestartet.

Weiter ist gemäß der Erfindung vorgesehen, dass zur Überwachung der Amplitude des Empfangssignals die über der Zeit aufeinander folgenden Amplituden des Empfangssignals aufsummiert werden, um aus dem Verlauf der Kurve des Summensignals über der Zeit eine signifikante Absenkung der Amplitude zu erkennen, so dass eine sichere Aussage über ein im Fahrweg befindliches Hindernis getroffen werden kann.

In einfacher Weise wird die Steigung der Kurve des Summensignals über der Zeit überwacht und bei einem signifikanten Abfallen der Steigung innerhalb eines vorgegebenen Zeitfensters eine signifikante Absenkung der Amplitude erkannt und die Erkennung eines im Fahrweg befindlichen Hindernisses angezeigt.

Die Bildung des Summensignals kann in einem Summenglied erfolgen, welches zweckmäßig im Ultraschallsensor integriert ist.

Die Auswertung des Empfangssignals erfolgt in einer dem Sensor nachgeschalteten Auswerteeinheit, wobei das vom Sensor abgegebene Empfangssignal unmittelbar über einen Vergleich mit einem Schwellwert ausgewertet werden kann.

Die Auswertung der Empfangssignale auf Vorliegen eines charakteristischen Bodenechos erfolgt zweckmäßig innerhalb der ersten 6 bis 8 ms nach Aussenden eines Ultraschallsignals.

Weitere Merkmale der Erfindung ergeben sich aus den weiteren Ansprüchen, der Beschreibung und der Zeichnung, in der nachfolgend im Einzelnen beschriebene Ausführungsbeispiele der Erfindung dargestellt sind. Es zeigen:
- Fig. 1: eine Seitenansicht eines Kraftfahrzeugs mit an einem Ende des Fahrzeugs angeordnetem Ultraschallsensor mit skizziertem Ultraschallkegel,
- Fig. 2: ein Diagramm des Empfangssignals des Ultraschallsensors nach Fig. 1 mit erfasstem Bodenecho,
- Fig. 3: ein Diagramm des Summensignals der Amplituden über der Zeit,
- Fig. 4: eine Seitenansicht auf ein Kraftfahrzeug nach Fig. 1 am Rande eines Abgrunds,
- Fig. 5: ein Diagramm der Amplituden des Empfangssignals über der Zeit bei Erfassen eines Abgrunds,
- Fig. 6: ein Summensignal der Amplituden der Empfangssignale über der Zeit bei Erfassen eines Abgrundes,
- Fig. 7: ein Diagramm der Amplitude des Bodenechos über der Zeit,
- Fig. 8: in schematischer Darstellung eine Vorrichtung zur Hinderniserkennung im Fahrweg eines Fahrzeugs durch einen Ultraschallsensor.

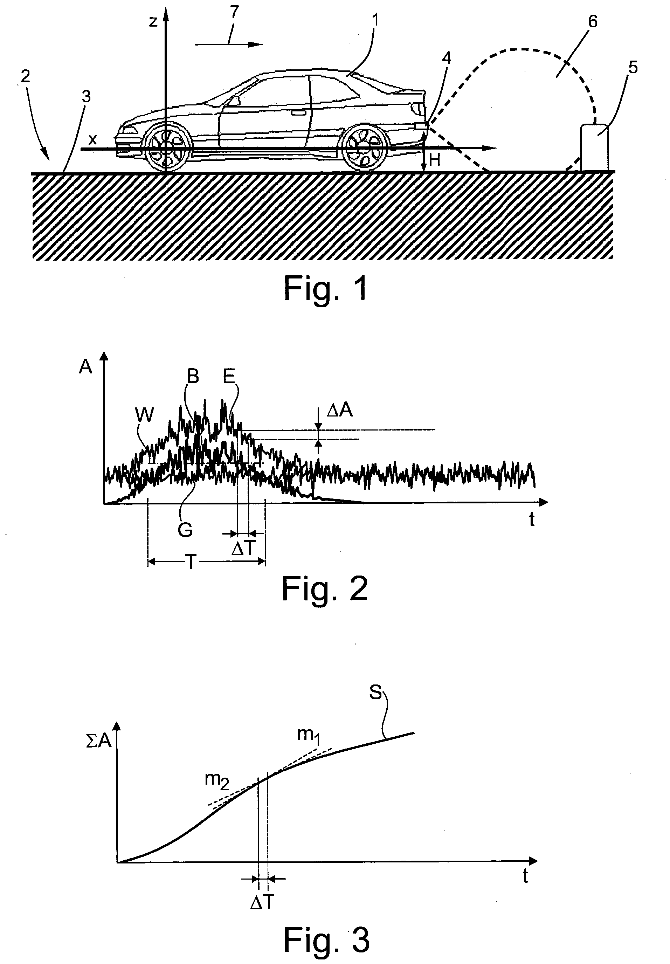

In Fig. 1 ist in Seitenansicht ein Fahrzeug 1 auf einem Fahrweg 2 gezeigt. Das Fahrzeug ist im Ausführungsbeispiel ein Kraftfahrzeug, insbesondere ein PKW. Das Fahrzeug 1 steht auf dem Boden 3 des Fahrwegs auf; die Längsachse des Fahrzeugs ist mit x bezeichnet; die Hochachse des Fahrzeugs ist mit z bezeichnet.

Im Frontbereich und im Heckbereich des Fahrzeugs 1 sind - bevorzugt in den Stoßfängern - Ultraschallsensoren angeordnet, von denen in Fig. 1 im Heckbereich ein einzelner Ultraschallsensor 4 dargestellt ist. Der Ultraschallsensor 4 ist in einer Höhe H über dem Boden 3 des Fahrwegs 2 fest am Fahrzeug 1 montiert.

Zur Erfassung eines Hindernisses 5 sendet der Ultraschallsensor 4 ein keulenartig abgestrahltes Ultraschallsignal 6 aus, welches am Hindernis 5 reflektiert und vom Ultraschallsensor 4 wieder empfangen wird. Durch Auswertung der Laufzeiten des Ultraschallsignals zwischen dem Sensor 4 und dem Hindernis 5 kann der Abstand des Fahrzeugs 1 zum Hindernis 5 erkannt und angezeigt werden.

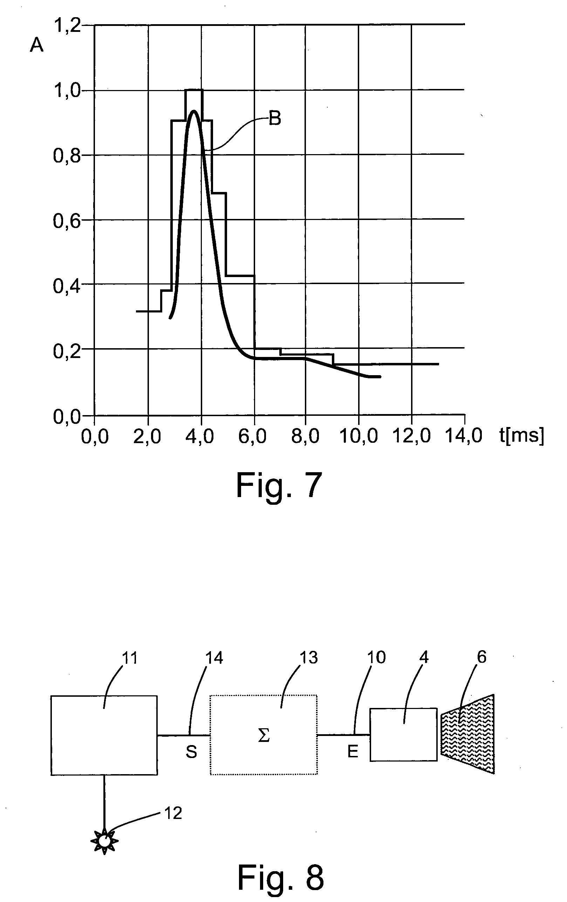

Das keulenartig abgestrahlte Ultraschallsignal 6 wird aber nicht nur vom Hindernis 5 reflektiert; auch der Boden 3 des Fahrwegs 2 reflektiert das ausgesandte Ultraschallsignal zurück zum Ultraschallsensor 4. Das zeitliche Intensitätsprofil dieses Bodenechos des am Boden reflektierten Schalls weist eine definierte Form auf, wie sie in Fig. 7 dargestellt ist. Das vom Ultraschallsensor 4 abgegebene und in Fig. 2 dargestellte Empfangssignal E setzt sich zusammen aus einem Grundrauschen G, aus Umgebungsrauschen und elektronischem Rauschen sowie dem am Boden 3 des Fahrwegs 2 reflektierten Bodenecho B.

Das in Fig. 2 dargestellte Bodenecho B ist als gefiltertes Signal in Fig. 7 dargestellt. Wie Fig. 7 zu entnehmen, hat das Bodenecho B im Bereich von 4 ms eine normierte Amplitude von ca. 1; das Bodenecho selbst hat eine zeitliche Länge von ca. 2 ms, die etwa 3 ms nach dem Aussenden des Ultraschallsignals beginnt und etwa 5 ms nach dem Aussenden des Ultraschallsignals endet.

Das in Fig. 2 zeitlich gestreckte Bodenecho B weist eine typische Form auf, die zusammen mit dem Grundrauschen G die Amplitude A des Empfangssignals E bestimmt.

Bildet man die Summe der Amplituden A des Empfangssignals E über der Zeit t, ergibt sich die in Fig. 3 dargestellte charakteristische Kurve S des Summensignals ∑A mit einer mittleren Steigung m. Innerhalb eines Zeitfensters ΔT der Messung ergeben sich diskrete Steigungen m₁ bzw. m₂, die keine signifikanten Abweichungen von einem Mittelwert aufweisen.

Entsprechend ist in einem Zeitfenster ΔT der Messung die Differenz ΔA der Amplituden innerhalb einer schmalen Bandbreite gering; die Form des Bodenechos B ist gleichmäßig. Die Amplitude A des Empfangssignals E liegt in einem Überwachungszeitraum T oberhalb eines Schwellwertes W.

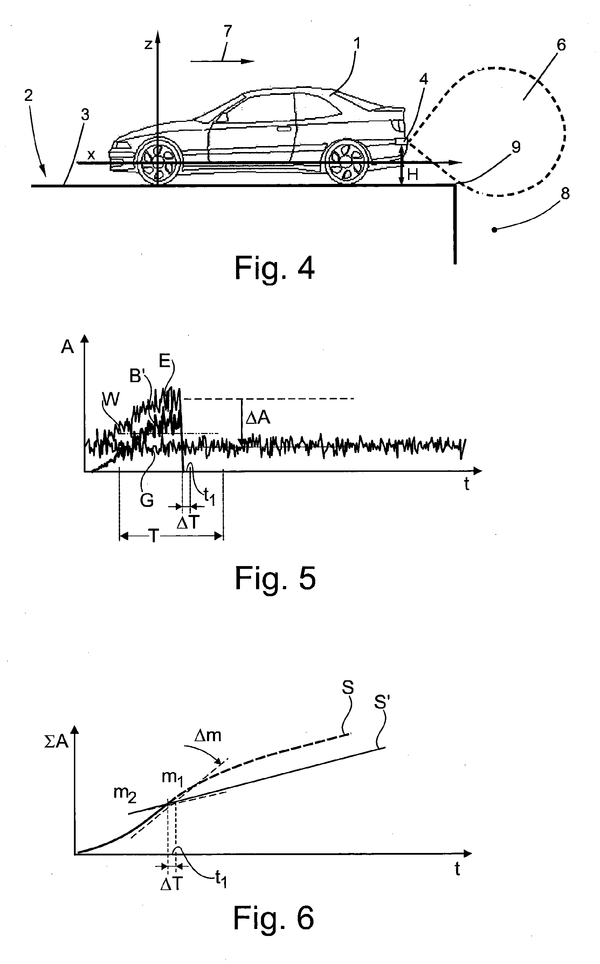

Fährt das Fahrzeug 1 in Fahrtrichtung 7 auf einen Abgrund 8 zu, wird das keulenartige Ultraschallsignal über die Kante 9 des Abgrundes 8, z. B. die Kante 9 einer Kaimauer, abstrahlen, ohne dass dieser Teil des Ultraschallsignals 6 reflektiert wird. Entsprechend ändert sich das Bodenecho, wie in Fig. 5 dargestellt.

Ein Teil des Ultraschallsignals 6 wird vom Boden 3 des Fahrwegs 2 hinter dem Fahrzeug 1 reflektiert, so dass sich zwar ein Bodenecho B' aufbaut, welchem jedoch die Anteile des ausgesandten Ultraschallsignals fehlen, die über die Kante 9 in den Abgrund 8 abgestrahlt werden. Das zeitliche Intensitätsprofil des Bodenechos B' bricht zu einem Zeitpunkt t₁ ab, so dass auch das summierte Empfangssignal E zum Zeitpunkt t₁ signifikant einbricht, im Ausführungsbeispiel nach Fig. 5 bis auf das Grundrauschen G einbricht. Ein Erkennen der Annäherung des Fahrzeugs 1 an ein Hindernis in Form eines Abgrundes 8 ist somit durch Analyse des Empfangssignals E bzw. des Bodenechos B möglich. Durch Überwachung der Amplitude A des Empfangssignals E über der Zeit t kann die signifikante Absenkung der Amplitude A um ΔA erkannt und eine Erkennung eines im Fahrweg befindlichen Hindernisses ausgelöst werden. In einfacher Weise wird ein der charakteristischen Form des Bodenechos B (Fig. 2) angepasster Schwellwert W vorgesehen, der über ein Zeitfenster T nicht unterschritten werden darf. Wie in Fig. 5 dargestellt, wird aufgrund des unvollständigen Bodenechos B' die Amplitude des Empfangssignals zum Zeitpunkt t1 einbrechen, so dass die Amplitude A des Empfangssignals sprungartig unter den Schwellwert W fällt; fällt die Amplitude A des Empfangssignals E unter den Schwellwert W, ist ein im Fahrweg befindliches Hindernis - im Ausführungsbeispiel der Abgrund 8 - erkannt und wird angezeigt.

In entsprechender Weise kann ein Messintervall ΔT gewählt werden, innerhalb dessen die zeitlich aufeinander folgenden Amplituden A des Empfangssignals E miteinander verglichen werden; wird eine signifikante Änderung ΔA zeitlich aufeinander folgender Amplituden A festgestellt, ist ein im Fahrweg 2 befindliches Hindernis - im Ausführungsbeispiel ein Abgrund 8 - erkannt und wird angezeigt.

Die Änderung des Bodenechos B drückt sich somit in einer signifikanten Änderung der Amplitude A des Empfangssignals E aus; die Änderung der Amplitude A wird in der Ausführung der Erfindung über die Überwachung der Kurve S des Summensignals der Amplituden A über der Zeit festgestellt werden, wie in Fig. 6 dargestellt. Das Summensignal ∑A baut sich - sofern ein Bodenecho B in charakteristischer Form vorhanden ist - entsprechend der Kurve S in Fig. 3 auf. Diese Summenkurve ist in Fig. 6 strichliert dargestellt.

Fehlt ein Teil des Bodenechos B, weil z. B. das Ultraschallsignal 6 teilweise über die Kante 9 in den Abgrund 8 abstrahlt, wächst die Kurve S' des Summensignals ∑A mit geringerer Steigung m. Lag vor dem Zeitpunkt t₁ die Steigung im Bereich m₁, flacht die Steigung ab dem Zeitpunkt t₁ auf eine Steigung m₂ ab. Diese signifikante Änderung Δm der Steigung wird erkannt und daraus abgeleitet, dass das Bodenecho B keine oder nur eine unvollständige charakteristische Form hat. Liegt somit eine signifikante Änderung Δm der Steigung der Kurve S' des Summensignals ∑A vor, dieses Signal zur Erkennung des Hindernisses - im Ausführungsbeispiel der Abgrund 8 - genutzt.

Das Verfahren ist besonders einfach, da keine aufwendigen Rechenleistungen notwendig sind, um das Empfangssignal E des Sensors 4 auszuwerten. Am Ausgang 10 (Fig. 8) des Sensors 4 steht das Empfangssignal E an, welches unmittelbar einer Auswerteeinheit 11 zugeführt wird, die in einfacher Ausgestaltung einen Schwellwertvergleich vorsieht. Liegt innerhalb des zu überwachenden Zeitfensters T ein Empfangssignal E mit einer Amplitude A vor, die unterhalb des Schwellwertes W liegt, wird z. B. eine Warnleuchte 12 aktiviert oder ein vollautomatischer Bremseingriff beim Fahrzeug 1 eingeleitet.

Soll erfindungsgemäß eine Erkennung eines Abgrundes 8 über die Summenkurve ∑A erfolgen, wird zwischen dem Sensor 4 und der Auswerteeinheit 11 zweckmäßig ein Summenglied 13 vorgesehen. Das Summensignal ∑A am Ausgang 14 des Summengliedes 13 wird in entsprechender Weise in der Auswerteeinheit 11 ausgewertet und bei Erkennung eines Hindernisses - im Ausführungsbeispiel eines Abgrundes 8 - eine optische Anzeige 12 ansteuern.

Das beschriebene Verfahren kann in entsprechend angepasster Weise auch genutzt werden, wenn sich im Erfassungsbereich des Ultraschallsensors nur schlecht reflektierende Hindernisse, z. B. Schall schluckende Hindernisse befinden. Eine plötzliche Änderung des Signalbildes des Empfangssignals E lässt Rückschlüsse auf das Hindernis zu. Auch ist denkbar, das charakteristische Intensitätssignal des Bodenechos B derart auszuwerten, dass die Beschaffenheit des Fahrweges im Groben erfasst werden kann, z. B. im Fahrweg eingelassene Gitterroste, Schotterwege, Sand oder dergleichen.

## Patentansprüche

1. Verfahren zur Hinderniserkennung im Fahrweg (2) eines Fahrzeugs (1) durch einen Ultraschallsensor (4) in einem Umfelderkennungssystem eines Kraftfahrzeugs, wobei der Ultraschallsensor (4) am Fahrzeug (1) in einer vorgegebenen Höhe (H) zum Boden (3) des Fahrwegs (2) angeordnet ist, und nach einem Aussenden eines Ultraschallsignals (6) die Amplituden (A) des vom Ultraschallsensor (4) empfangenen Echosignals über der Laufzeit (t) erfasst werden und als Empfangssignal (E) des Ultraschallsensors (4) zum Erkennen des Hindernisses (5, 8) ausgewertet werden,
wobei die Amplituden (A) des Empfangssignals (E) über der Zeit (t) überwacht werden und bei einer signifikanten Absenkung (Δa) der Amplitude (A) innerhalb eines vorgegebenen Zeitfensters (T) die Erkennung eines im Fahrweg (2) befindlichen Hindernisses (5, 8) angezeigt wird, **dadurch gekennzeichnet, dass** zur Überwachung der Amplitude (A) die über der Zeit (t) aufeinander folgenden Amplituden (A) des Empfangssignals (E) aufsummiert werden und aus dem Verlauf der Kurve des Summensignals (S) über der Zeit (t) eine signifikante Absenkung (ΔA) der Amplitude (A) erkannt und eine Aussage über ein im Fahrweg (2) befindliches Hindernis (5, 8) getroffen wird, derart dass die Steigung (m) der Kurve des Summensignals (S) über der Zeit (t) überwacht wird und bei einem signifikanten Abfallen der Steigung (m) innerhalb eines vorgegebenen Zeitfensters (ΔT) die Erkennung eines im Fahrweg (2) befindlichen Hindernisses (5, 8) ausgelöst wird.

2. Verfahren nach Anspruch 1,
**dadurch gekennzeichnet, dass** ein zeitliches Intensitätsprofil (B) des vom Boden (3) des Fahrwegs (2) reflektierten Schalls ausgewertet wird.

3. Verfahren nach Anspruch 1 oder 2,
**dadurch gekennzeichnet, dass** bei Unterschreiten eines vorgegebenen Schwellwertes (W) durch die Amplitude (A) des Empfangssignals (E) die Erkennung eines im Fahrweg (2) befindlichen Hindernisses (5, 8) ausgelöst wird.

4. Verfahren nach einem der Ansprüche 1 bis 3,
**dadurch gekennzeichnet, dass** in der Zeit (t) aufeinander folgende Amplituden (A) des Empfangssignals (E) miteinander verglichen werden und bei einer signifikanten Änderung (ΔA) zeitlich aufeinander folgender Amplituden (A) die Erkennung eines im Fahrweg (2) befindlichen Hindernisses (5, 8) ausgelöst wird.

5. Verfahren nach Anspruch 1,
**dadurch gekennzeichnet, dass** die Bildung des Summensignals (∑A) in einem Summenglied (13) innerhalb des Gehäuses des Ultraschallsensors (4) erfolgt.

6. Verfahren nach einem der Ansprüche 1 bis 5,
**dadurch gekennzeichnet, dass** die Auswertung des Empfangssignals (E) in einer dem Ultraschallsensor (4) nachgeschalteten Auswerteeinheit (11) erfolgt.

7. Verfahren nach einem der Ansprüche 1 bis 6,
**dadurch gekennzeichnet, dass** die Auswertung des Empfangssignals (E) innerhalb der ersten 6 bis 8 ms nach Absenden eines Ultraschallsignals (6) erfolgt.

## Claims

1. Method for detecting obstacles in the path (2) of a vehicle (1) by means of an ultrasonic sensor (4) in an environment detection system of a motor vehicle, wherein the ultrasonic sensor (4) is arranged on the vehicle (1) at a predefined height (H) with respect to the ground (3) of the path (2) and, after an ultrasonic signal (6) has been emitted, the amplitudes (A) of the echo signal received by the ultrasonic sensor (4) are captured over the propagation time (t) and are evaluated as the reception signal (E) of the ultrasonic sensor (4) for the purpose of detecting the obstacle (5, 8),
wherein the amplitudes (A) of the reception signal (E) are monitored over time (t) and the detection of an obstacle (5, 8) in the path (2) is indicated in the event of a significant decrease (Δa) in the amplitude (A) within a predefined time window (T), **characterized in that**, in order to monitor the amplitude (A), the amplitudes (A) of the reception signal (E) which are successive over time (t) are summed and a significant decrease (ΔA) in the amplitude (A) is detected from the profile of the curve of the sum signal (S) over time (t) and a statement relating to an obstacle (5, 8) in the path (2) is made such that the gradient (m) of the curve of the sum signal (S) is monitored over time (t) and the detection of an obstacle (5, 8) in the path (2) is initiated in the event of a significant decrease in the gradient (m) within a predefined time window (ΔT).

2. Method according to Claim 1,
**characterized in that** a temporal intensity profile (B) of the sound reflected by the ground (3) of the path (2) is evaluated.

3. Method according to Claim 1 or 2,
**characterized in that** the detection of an obstacle (5, 8) in the path (2) is initiated if a predefined threshold value (W) is undershot by the amplitude (A) of the reception signal (E).

4. Method according to one of Claims 1 to 3,
**characterized in that** amplitudes (A) of the reception signal (E) which are successive over time (t) are compared with one another and the detection of an obstacle (5, 8) in the path (2) is initiated in the event of a significant change (ΔA) in temporally successive amplitudes (A).

5. Method according to Claim 1,
**characterized in that** the sum signal (∑A) is formed in a summing element (13) inside the housing of the ultrasonic sensor (4).

6. Method according to one of Claims 1 to 5,
**characterized in that** the reception signal (E) is evaluated in an evaluation unit (11) downstream of the ultrasonic sensor (4).

7. Method according to one of Claims 1 to 6,
**characterized in that** the reception signal (E) is evaluated within the first 6 to 8 ms after an ultrasonic signal (6) has been sent.

## Revendications

1. Procédé de reconnaissance d'obstacles dans la voie de circulation (2) d'un véhicule (1) par un capteur d'ultrasons (4) dans un système de reconnaissance d'environnement d'un véhicule automobile, le capteur d'ultrasons (4) étant disposé sur le véhicule (1) à une hauteur (H) prédéfinie par rapport au sol (3) de la voie de circulation (2), et après une émission d'un signal ultrasonore (6), les amplitudes (A) du signal d'écho reçu par le capteur d'ultrasons (4) étant acquises au cours du temps de propagation (t) et interprétées en tant que signal reçu (E) du capteur d'ultrasons (4) en vue de reconnaître l'obstacle (5, 8),
les amplitudes (A) du signal reçu (E) au cours du temps (t) étant surveillées et la reconnaissance d'un obstacle (5, 8) qui se trouve dans la voie de circulation (2) étant signalée lors d'une chute importante (Δa) de l'amplitude (A) au sein d'une fenêtre temporelle (T) prédéfinie, **caractérisé en ce que** pour la surveillance de l'amplitude (A) au cours du temps (t), les amplitudes (A) successives du signal reçu (E) sont additionnées et une chute importante (Δa) de l'amplitude (A) est reconnue à partir du tracé de la courbe du signal total (S) au cours du temps (t) et une affirmation à propos d'un obstacle (5, 8) qui se trouve dans la voie de circulation (2) est effectuée, de sorte que la pente (m) de la courbe du signal total (S) au cours du temps (t) est surveillée et la reconnaissance d'un obstacle (5, 8) qui se trouve dans la voie de circulation (2) est déclenchée lors d'une chute importante de la pente (m) au sein d'une fenêtre temporelle (ΔT) prédéfinie.

2. Procédé selon la revendication 1, **caractérisé en ce qu'**un profil d'intensité (B) temporel du son réfléchi par le sol (3) de la voie de circulation (2) est interprété.

3. Procédé selon la revendication 1 ou 2, **caractérisé en ce que** la reconnaissance d'un obstacle (5, 8) qui se trouve dans la voie de circulation (2) est déclenchée dans le cas où l'amplitude (A) du signal reçu (E) devient inférieure à une valeur de seuil (W) prédéfinie.

4. Procédé selon l'une des revendications 1 à 3, **caractérisé en ce que** les amplitudes (A) successives du signal reçu (E) sont comparées entre elles dans le temps (t) et la reconnaissance d'un obstacle (5, 8) qui se trouve dans la voie de circulation (2) est déclenchée dans le cas d'une variation importante (ΔA) des amplitudes (A) successives dans le temps.

5. Procédé selon la revendication 1, **caractérisé en ce que** la formation du signal total (∑A) est effectuée dans un élément additionneur (13) à l'intérieur du boîtier du capteur d'ultrasons (4).

6. Procédé selon l'une des revendications 1 à 5, **caractérisé en ce que** l'interprétation du signal reçu (E) est effectuée dans une unité d'interprétation (11) branchée à la suite du capteur d'ultrasons (4).

7. Procédé selon l'une des revendications 1 à 6, **caractérisé en ce que** l'interprétation du signal reçu (E) est effectuée pendant les 6 à 8 premières millisecondes après l'émission d'un signal ultrasonore (6) .
